# EUROPEAN PATENT APPLICATION

(11) **EP 1 983 110 A2**
(43) Date of publication of application: **22.10.2008**
(21) Application number: 07109408.0
(22) Date of filing: 01.06.2007
(51) Int. Cl.: E02B 11/00, F16L 9/19

(54) **Drainage pipe for the catchment and return of sea water**

(30) Priority: 20.04.2007 ES 200701065
(71) Applicant: Catalana de Perforacions, S.A., E-08259 Fonollosa-Barcelona (ES)
(72) Inventor: Pintó Bascompte, Josep Doménec, 08259, Fonollosa (ES)
(74) Representative: Pons Arino, Angel

(57) **Abstract**

Described is a drainage pipe, intended to supply a desalination plant for the production of drinking water. In accordance with the invention, this drainage pipe is used for the catchment and return of sea water and is installed in a horizontally positioned borehole that passes through a productive marine aquifer. The drainage pipe comprises an outer permeable pipe (3) for the catchment of sea water, through the inside of which runs an inner impermeable pipe (4) to return the waste water.

## Description

### OBJECT OF THE INVENTION

The present invention refers to a drainage pipe for the catchment and return of sea water intended to supply a desalinating plant for the production of drinking water.

The object of the invention focuses on a drainage pipe intended to be installed in the sea bed by means of a horizontally positioned borehole, through which the sea water catchment is carried out, as well as the return of the waste water discharged from the desalination, all through the same borehole.

### BACKGROUND OF THE INVENTION

Water consumption needs have obliged the installation of desalination plants that collect sea water to be processed by inverse osmosis treatment in order to obtain suitable water for agricultural, industrial and even domestic consumption.

Sea water catchment is one of the sectors that is currently seeing immense improvement to its technology, above all thanks to the appearance of sea water catchment technology, like horizontally positioned drains.

Already familiar with regarding this technique is Spanish patent ES2251874 by the same applicant, related to a procedure to install horizontal drains for sea water catchment, consisting of carrying out several boreholes from the coastline, positioned towards the sea that crosses submerged productive strata, inside which the tubular drains are inserted, bored only into the sections that coincide with the foreseen productive zones.

By means of the installation of these drains, catchment of the aquiferous strata-filtered sea water is carried out for its supply to a desalination plant for drinking water production, by means of inverse osmosis processes.

Generally, these types of desalination plants, as a result of the inverse osmosis processes, produce waste water with a high salt concentration, returned to the sea with the smallest possible environmental impact. To this end, alternative installations are constructed with separate boreholes and pipelines that drain and disperse the above-mentioned waste to points far away from the coast in order to avoid damage to the flora and fauna at sea, whose marine currents are responsible for removing excess salinity. To reduce the saline concentration of the above-mentioned waste, it is mixed with sea water before being drained into the sea.

Therefore, the treatment and drainage of the aforementioned waste water needs additional installations that considerably increase the construction and maintenance costs of a desalination plant.

### DESCRIPTION OF THE INVENTION

The drainage pipe for sea water catchment and return that the invention proposes solves the aforementioned problem by using the same boreholes for sea water catchment and return of the waste water for its dispersion in the sea.

To this end, and in a more specific way, the sea water catchment and return drainage pipe of the type installed by means of a horizontally positioned borehole passing through a productive marine aquifer, is made up of an outer permeable pipe for the sea water catchment, through the inside of which runs a second impermeable pipe to return the waste water. In this way, both pipes pass through the same borehole without the fluids mixing together.

The outermost end of the external permeable pipe has a plug to avoid the direct inlet of sea water, fitted with an opening for the outlet of the inner impermeable pipe.

So that the dispersion of the waste water takes place as far away as possible from the catchment area, the inner permeable pipe extends beyond the permeable pipe with an additional section.

Optionally, for a better dispersion of the waste water, the outermost end of the inner impermeable pipe may have a diffuser.

### DESCRIPTION OF THE DRAWINGS

To complete the description that is being given and in order to help give a better understanding of the invention's characteristics, with the idea to provide an essential example of its practical undertaking, a set of drawings with an illustrative, non-restrictive character is attached as an integral part of the afore-mentioned description, showing the following:

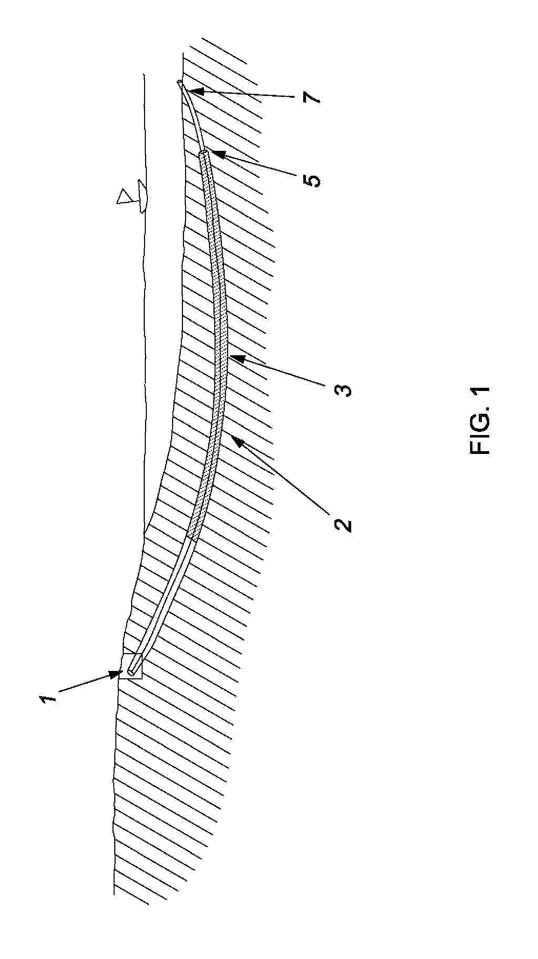

Figure 1 shows an illustrative diagram of a drainage pipe installed by means of a horizontally positioned borehole.

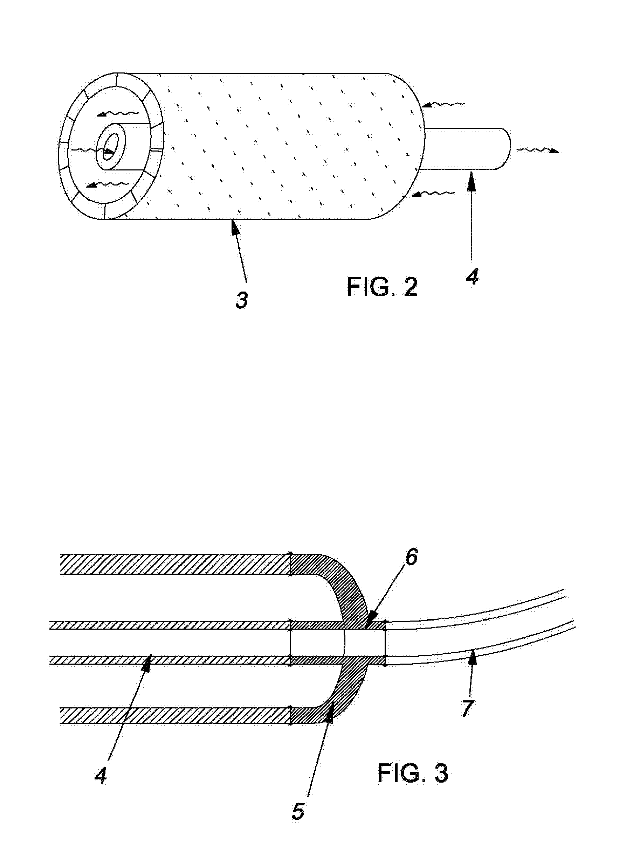

Figure 2 shows a section in perspective of the drainage pipe where the inner pipe may be seen.
Figure 3 shows a longitudinal section of the end of the drainage pipe where the plug and extension of the inner pipe may be seen.

### PREFERRED EMBODIMENT OF THE INVENTION

In view of the outlined drawings, it can be seen that the drainage pipe for the catchment and return of sea water is installed by means of a horizontally positioned borehole at a point on the coast (1) where the desalination plant to treat the water will be installed, through the sea bed containing the productive aquifer (2).

Fitted inside the above-mentioned borehole is the pipe comprising an outer permeable pipe (3) that permits the inlet of the surrounding water through the aquiferous strata where it is installed, for its transfer to the desalination plant. The above-mentioned outer permeable pipe (3), properly strengthened to withstand installation stress, guarantees that particles larger that a set size do not enter it and block it up. Catchment is carried out in a continuous way and at low speeds to avoid the movement of fines.

For the return and drainage of the waste water, containing a high degree of salinity, produced by the desalination plant, a second inner impermeable pipe (4) that runs along the inside of the outer permeable pipe (3) is fitted. Thus, both pipes, without the fluids mixing together and without the need to carry out extra boreholes or installations, may run through the same borehole.

For good flow distribution through the above- mentioned pipes, the diameter of the inner impermeable pipe (4) is far less than the diameter of the outer permeable pipe (3).

The outermost end of the external permeable pipe is shut off by means of a plug (5), fitted with an opening (6) for the outlet of the inner impermeable pipe (4).

For the dispersion of the waste water, the inner impermeable pipe (4) extends further than the outer permeable pipe (3) with an additional section that juts out from the sea bed to drain the waste water into the sea. The outermost end of the aforementioned inner impermeable pipe (4) may optionally be fitted with a diffuser, not shown in the drawings, to minimize environmental impact.

Thanks to the drainage pipe aimed at in the present invention, impact on the sea is considerably reduced, since it avoids the need to carry out two separate works, one for catchment and another for return of the waste water, at the same time as reducing construction times and costs, on both functions being carried out through the same borehole.

## Claims

**1.** Drainage pipe for sea water catchment and return, designed to be installed by means of a horizontally positioned borehole that passes through a productive marine aquifer, **characterised by** comprising an outer permeable pipe (3) for the sea water catchment, through the inside of which runs an inner impermeable pipe (4) to return the waste water.

**2.** Drainage pipe for the catchment and return of sea water, according to claim 1, **characterised by** the outermost end of the external permeable pipe (3) having a plug (5), fitted with an opening (6), for the outlet of the inner impermeable pipe (4).

**3.** Drainage pipe for the catchment and return of sea water, according to claim 2, **characterised by** the inner impermeable pipe (4) extending further than the outer permeable pipe (3) with an additional section, for the distant dispersion of the waste water.

**4.** Drainage pipe for the catchment and return of sea water, according to claim 3, **characterized by** the outermost end of the inner impermeable pipe (4) having a diffuser.
